(19) Europäisches Patentamt
European Patent Office
Office européen des brevets

(11) **EP 1 591 961 B1**

(12) **EUROPÄISCHE PATENTSCHRIFT**

(45) Veröffentlichungstag und Bekanntmachung des Hinweises auf die Patenterteilung:
**28.03.2007 Patentblatt 2007/13**

(51) Int Cl.:
***G06T 7/00*** *(2006.01)*

(21) Anmeldenummer: **05090103.2**

(22) Anmeldetag: **14.04.2005**

(54) **Feststellen der Nutzbarkeit von Fernerkundungsdaten**

Determination of the usability of remote sensing data

Détermination de l'utilisation des données de télédétection

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **30.04.2004 DE 102004021697**
**13.05.2004 DE 102004024595**

(43) Veröffentlichungstag der Anmeldung:
**02.11.2005 Patentblatt 2005/44**

(73) Patentinhaber: **Deutsches Zentrum für Luft- und Raumfahrt e.V.**
**51147 Köln (DE)**

(72) Erfinder:
• **Borg, Erik**
**16247 Joachimsthal (DE)**
• **Fichtelmann, Bernd, Dr.**
**17235 Neustrelitz (DE)**

(74) Vertreter: **Effert, Bressel und Kollegen**
**Radickestrasse 48**
**12489 Berlin (DE)**

(56) Entgegenhaltungen:
**WO-A-03/069558**

• **ALGRA T: "On the effectiveness of cloud cover avoidance methods in support of the super-spectral mission for land applications" GEOSCIENCE AND REMOTE SENSING SYMPOSIUM, 2002. IGARSS '02. 2002 IEEE INTERNATIONAL JUNE 24-28, 2002, PISCATAWAY, NJ, USA,IEEE, Bd. 2, 24. Juni 2002 (2002-06-24), Seiten 982-985, XP010597898 ISBN: 0-7803-7536-0**
• **GRIFFIN M ET AL: "Cloud cover detection algorithm for EO-1 hyperion imagery" IGARSS 2003. IEEE 2003 INTERNATIONAL GEOSCIENCE AND REMOTE SENSING SYMPOSIUM. PROCEEDINGS. TOULOUSE, FRANCE, JULY 21 - 25, 2003, IEEE INTERNATIONAL GEOSCIENCE AND REMOTE SENSING SYMPOSIUM, NEW YORK, NY : IEEE, US, Bd. VOL 7 OF 7, 21. Juli 2003 (2003-07-21), Seiten 86-89, XP010705302 ISBN: 0-7803-7929-2**
• **IRISH R.R.: 'Landsat 7 Automatic Cloud Cover Assessment' PROC. SPIE Bd. 4049, 2000, Seiten 348 - 355**

**Beschreibung**

Die Erfindung betrifft ein Verfahren und eine Vorrichtung zum Feststellen einer Nutzbarkeit von Fernerkundungsdaten. Die Erfindung betrifft insbesondere Fernerkundungs-Bilddaten, die Objekte an der Erdoberfläche betreffen und von Erdsatelliten gewonnen werden.

Fernerkundungsdaten von Objekten (z. B. Flächen unterschiedlicher Landnutzung) an der Erdoberfläche sind häufig nur teilweise nutzbar, da sich zwischen dem Messsensor (z. B. an einem Satelliten oder in einem Flugzeug) und der Erdoberfläche Wolken befinden. Diese versperren dem Sensor die Sicht auf die Erdoberfläche, so dass die von der Erdoberfläche ausgehende emittierte und/oder reflektierte elektromagnetische Strahlung absorbiert. Weitere Gründe für eine eingeschränkte Nutzbarkeit sind z. B. Bodennebel, Sandstürme und andere bodennahe Erscheinungen bei denen ebenfalls die Sicht auf den Untergrund behindert ist.

Um ein Maß für die Nutzbarkeit von Fernerkundungsdaten zu erhalten, kann die Wolkenbedeckung z.B. als prozentualer Anteil eines Fernerkundungsbildes definiert werden, bei dem die Sicht auf den Untergrund durch Wolken behindert ist. Insbesondere bei mittelgroßen Werten der Wolkenbedeckung können die Fernerkundungsdaten auch bei gleicher prozentualer Wolkenbedeckung jedoch in Abhängigkeit von Größe und Verteilung der Wolken in sehr unterschiedlichem Maße für die Beobachtung des Untergrundes nutzbar sein. Die Erfindung ist nicht auf den Fall von durch Wolken maskierten Beobachtungsobjekten beschränkt. Wenn von Wolkenbedeckung die Rede ist, sollen damit auch andere Fälle, z. B. die in dem vorangegangenen Absatz erwähnten Fälle und Kombinationen davon erfasst sein.

Die Veröffentlichung von Theo Algra "On the effectiveness of cloud cover avoidance methods in support of the super-spectral mission for land applications" INTERNATIONAL GEOSCIENCE AND REMOTE SENSING SYMPOSIUM, 2002. IGARSS'02. JUNI 24-28, 2002, PISCATAWAY, NJ, USA, IEEE, Bd. 2, 24. Juni 2002, Seiten 982-985, XP010597898, ISBN: 0-7803-7536-0, beschreibt ein Konzept der selektiven Bildaufnahme, bei der lediglich ausgewählte Teile von Daten, die während eines Überfluges über ein interessierendes Gebiet aufgenommen wurden, an Bord gespeichert werden. Die Auswahl kann z.B. auf meteorologischen Satelliten-Wolkenkarten basieren, die unmittelbar vor dem Überflug des interessierenden Gebiets erhalten wurden.

R. Irish (Irish R. (2000): LANDSAT 7 Automatic Cloud Cover Assessment.- In: Algorithms for Multispectral, Hyperspectral, and Ultraspectral Imagery VI (Editor: S.S. Sylvia and M. R. Descour), Proc. SPIE (4049), S. 348-355) beschreibt ein Verfahren zur Wolkendetektion bei digitalen Bilddaten.

Es ist eine Aufgabe der vorliegenden Erfindung, ein Verfahren und eine Vorrichtung zum Feststellen einer Nutzbarkeit von Fernerkundungsdaten anzugeben, die ein objektives, automatisch bestimmbares Bewertungsergebnis ermöglichen.

Es wird vorgeschlagen, eine Bildmatrix zu verwenden, die einem aus den auszuwertenden Daten erzeugten Bild entspricht. Die Bildmatrix enthält Informationen darüber, welcher Bereich oder welche Bereiche des Bildes nicht oder nur eingeschränkt nutzbar sind. Aus diesen Informationen wird zumindest ein Maß dafür ermittelt, wie groß zumindest ein anderer, nutzbarer Bildbereich ist. Insbesondere wird die Größe des nutzbaren Bildbereichs durch eine oder mehrere räumlich eindimensionale Maße (z. B. Längen) charakterisiert.

Die Größe des nutzbaren Bildbereichs ist eine zuverlässige Angabe über den Wert des gesamten Bildes bei der Auswertung der Daten. Weist das Bild beispielsweise einen einzigen großen zusammenhängenden wolkenfreien Bereich auf, bestehen für viele Anwendungen nur geringfügige Einschränkungen bei der Auswertung eines solchen Datensatzes gegenüber dem Fall eines vollständig nutzbaren Bildes. Weist das Bild dagegen bei gleicher Wolkenbedeckung viele kleine nutzbare Bildbereiche auf, die durch Bereiche mit Wolken voneinander getrennt sind, ist die Nutzbarkeit des Bildes in der Regel deutlich geringer. Durch diese Erfindung kann die Größe des nutzbaren Bildbereichs mit verhältnismäßig geringem rechnerischem Aufwand objektiv ermittelt werden, wie noch anhand von Ausgestaltungen der Erfindung deutlich wird.

Das erfindungsgemäße Verfahren kann an die jeweiligen Anforderungen bei der Auswertung der zugrunde liegenden Daten angepasst werden. Beispielsweise kann bereits bei der Erstellung der Bildmatrix in unterschiedlicher Weise (unter Berücksichtigung der jeweiligen Anforderungen) entschieden werden, welche Größe die noch nutzbaren Bereiche des zugeordneten Bildes zumindest aufweisen sollen. Beispielsweise kann ein entsprechender Grenzwert für die Größe definiert werden. Dabei können insbesondere Messdaten mehrerer spektraler Kanäle (z. B. für unterschiedliche Frequenzbereiche von elektromagnetischer Strahlung, die auf die Sensoren einfällt) für die Detektion der nutzbaren bzw. nicht nutzbaren Bildbereiche verwendet werden.

Insbesondere wird Folgendes vorgeschlagen: Ein Verfahren zum Feststellen einer Nutzbarkeit von Fernerkundungsdaten, wobei

- eine Bildmatrix aus den Fernerkundungsdaten gebildet wird und/oder vorliegt,
- erste Matrixelemente der Bildmatrix nutzbare Informationen über ein oder mehrere Objekte der Fernerkundung aufweisen,
- zweite Matrixelemente der Bildmatrix keine oder nur eingeschränkt nutzbare Informationen über das oder die Objekte der Fernerkundung aufweisen,

- Abstände zwischen den ersten Matrixelementen und den zweiten Matrixelementen ermittelt werden und
- unter Verwendung der Abstände automatisch die Nutzbarkeit der Bildmatrix bewertet wird.

Ferner wird vorgeschlagen: Eine Vorrichtung zum Feststellen einer Nutzbarkeit von Fernerkundungsdaten, mit

- einer Matrix-Erstellungseinrichtung, die ausgestaltet ist, aus den Fernerkundungsdaten eine Bildmatrix zu erstellen, wobei erste Matrixelemente der Bildmatrix nutzbare Informationen über ein oder mehrere Objekte der Fernerkundung aufweisen und wobei zweite Matrixelemente der Bildmatrix keine oder nur eingeschränkt nutzbare Informationen über das oder die Objekte der Fernerkundung aufweisen,
- einer Abstands-Bestimmungseinrichtung, die ausgestaltet ist, Abstände zwischen den ersten Matrixelementen und den zweiten Matrixelementen zu ermitteln, und
- einer Bewertungseinrichtung, die ausgestaltet ist, unter Verwendung der Abstände automatisch die Nutzbarkeit der Bildmatrix zu bewerten.

Unter einer Bildmatrix wird insbesondere eine geordnete Gruppe von Matrixelementen verstanden, wobei in der geordneten Gruppe Richtungen definiert sind bzw. definiert werden können. In der Regel sind die Matrixelemente in Zeilen und Spalten geordnet. Zumindest ein Teil der Matrixelemente weist Werte auf, die aus den auszuwertenden Daten ermittelt wurden. Die Ordnung der Matrixelemente entspricht dabei dem aufgenommenen Bild. Beispielsweise enthält jedes der Matrixelemente einen Grauwert, dessen Wert den spektralen Eigenschaften der aufgezeichneten Objekte entspricht.

Die Bildmatrix muss nicht rechteckig sein und muss nicht einem rechteckigen Bild entsprechen. Z. B. wenn getrennte Bereiche eines Bildes (beispielsweise einer Fernerkundungsszene) für sich ausgewertet werden sollen (etwa bei einem Bild von einem Bereich der Erdoberfläche mit Land- und Wassergebieten, für den aber nur die Landgebiete von Interesse sind und somit eine vollständige Wolkenbedeckung der Wasserflächen für eine derartige Bewertung nahezu ohne Bedeutung ist), kann die Form der Bildmatrix unregelmäßig sein und nur einem Teilbereich eines Bildes entsprechen und/oder kann die Anzahl der Matrixelemente pro Zeile und/oder pro Spalte variieren. Im Hinblick auf eine einfache und effektive Handhabung der Bildmatrix wird jedoch bevorzugt, in jedem Fall rechteckige Matrizen mit konstanter Zahl von Matrixelementen pro Zeile und pro Spalte zu verwenden. Beispielsweise ist es hierbei möglich, denjenigen Teilbereichen des Bildes, die nicht ausgewertet werden sollen, bestimmte Werte der zugeordneten Matrixelemente zuzuweisen und/oder diese Teilbereiche auf andere Weise in der Bildmatrix zu markieren und/oder zu kennzeichnen. Insbesondere kann eine numerische Verarbeitung der Matrixelemente auf bestimmte Bereiche in Zeilen und/oder Spalten der Bildmatrix eingeschränkt werden, wobei diese Bereiche dem auszuwertenden Teilbereich der Bildmatrix entsprechen.

Insbesondere können für zumindest einen Teil der ersten Matrixelemente jeweils erste Abstände zu einem Rand der Bildmatrix und/oder zu einem Rand eines Teilbereichs der Bildmatrix und jeweils zweite Abstände zu den zweiten Matrixelementen ermittelt werden, wobei unter Verwendung der ersten und der zweiten Abstände die Nutzbarkeit der Bildmatrix und damit des Bildes abgeleitet wird. Dabei ist es insbesondere möglich, nicht zwischen den ersten Abständen und den zweiten Abständen zu unterscheiden und aus Sicht des jeweiligen ersten Matrixelements den Abstand zu dem Rand oder dem zweiten Matrixelement zu ermitteln, je nach dem welcher Abstand kleiner ist. Weiterhin ist es möglich, den Abstand oder die Abstände aus Sicht des jeweiligen ersten Matrixelements in einer Mehrzahl von Richtungen zu ermitteln (bei einer in Zeilen und Spalten geordneten zweidimensionaien Matrix vorzugsweise in die vier Richtungen, die durch die Zeilen und Spalten definiert sind, und optional zusätzlich in die vier diagonalen Richtungen der Matrix).

Bei einer bevorzugten Ausgestaltung wird für zumindest einen Teil der Matrixelemente, für die die Abstände ermittelt wurden, jeweils ein Minimum der für das Matrixelement ermittelten Abstände bestimmt und wird die Nutzbarkeit der Bildmatrix unter Verwendung des Minimums bewertet. Die verschiedenen für das Matrixelement ermittelten Abstände beziehen sich insbesondere auf jeweils eine der zuvor genannten verschiedenen Richtungen.

Insbesondere kann für jedes der ersten Matrixelemente der kleinste Abstand zu allen vorhandenen zweiten Matrixelementen (oder zu allen zweiten Matrixelementen in einem Teilbereich der Bildmatrix) und/oder der kleinste Abstand zu anderen Positionen in der Bildmatrix ermittelt werden. Solche anderen Positionen können beispielsweise durch den Rand der Bildmatrix und/oder auf andere Weise definiert sein.

Mit anderen Worten: Für jedes der ersten Matrixelemente wird ein Maß dafür ermittelt, wie weit das Matrixelement mindestens von dem nächstliegenden zweiten Matrixelement und/oder von den anderen definierten Positionen entfernt ist. Bereits durch diese Maßnahme ist eine Bewertung der Nutzbarkeit der Daten möglich, die der Bildmatrix zugrunde liegen. Z. B. können die kleinsten Abstände zu einer Ergebnismatrix geordnet werden, wobei die Positionen der kleinsten Abstände in der Ergebnismatrix den Positionen der zugehörigen ersten Matrixelemente entsprechen. Anhand der Ergebnismatrix kann in einfacher Weise ermittelt werden, wie groß Gebiete der Bildmatrix mit nutzbaren Daten sind.

Auf Grundlage der kleinsten Abstände kann automatisch eine weitere Bewertung vorgenommen werden. Beispielsweise werden die kleinsten Abstände der ersten Matrixelemente aufsummiert, wird ein Mittelwert der kleinsten Abstände gebildet und/oder wird ermittelt, wie groß der größte der kleinsten Abstände ist (Maximalwert der kleinsten Abstände).

Weiterhin kann zumindest eines der zuvor genannten Ergebnisse zu einem Vergleich mit einem Referenzfall verwendet werden. Hierzu eignet sich beispielsweise eine hinsichtlich ihrer Größe und Ordnung der Bildmatrix entsprechende Referenzmatrix, die jedoch ausschließlich erste Matrixelemente aufweist. Dementsprechend sind keine zweiten Matrixelemente vorhanden und sind beispielsweise die kleinsten Abstände ausschließlich durch den Rand der Bildmatrix und/oder durch andere definierte Positionen in der Bildmatrix bestimmt.

Insbesondere wenn für zumindest einen Teil der ersten Matrixelemente Abstände zu einem Rand der Bildmatrix und/oder zu einem Rand eines Teilbereichs der Bildmatrix sowie zu den zweiten Matrixelementen ermittelt werden, kann das Ergebnis der Nutzbarkeitsbewertung im Falls eines geringen Anteils von nicht nutzbaren (zweiten) Matrixelementen von der Position der zweiten Matrixelemente in der Bildmatrix abhängen. Um diesem Problem zu begegnen, können die Abstände jeweils für Teile der Bildmatrix ermittelt werden und/oder die Bewertung insgesamt jeweils für Teile der Bildmatrix vorgenommen werden.

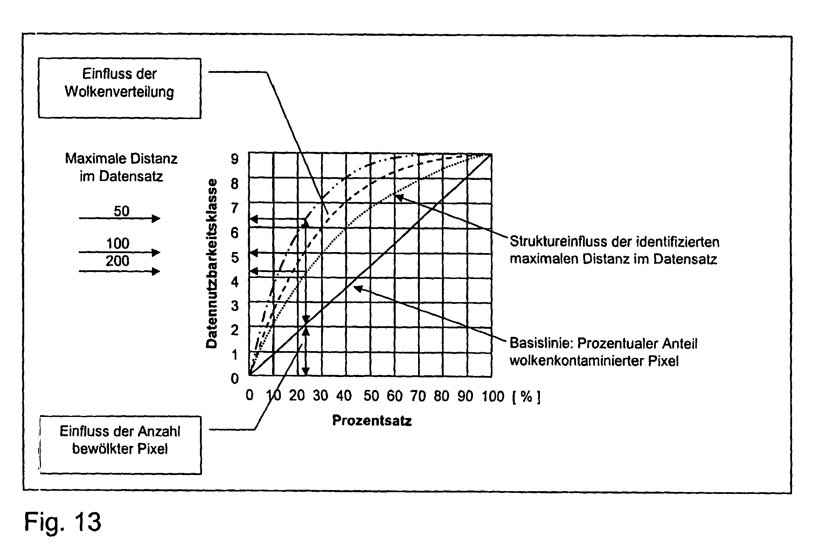

Alternativ oder zusätzlich kann bei der Bewertung der Nutzbarkeit der Bildmatrix der Anteil der zweiten Matrixelemente an der Gesamtzahl der Matrixelemente und/oder eine äquivalente Größe berücksichtigt werden. Insbesondere kann die Bewertungsgröße unmittelbar von diesem Anteil abhängen. Beispielsweise kann ein Gewichtungswert hierzu verwendet werden, der von dem Anteil der zweiten Matrixelemente abhängt. Ein Beispiel hierfür wird später bei der Beschreibung der Fig. 13 gegeben. Der Gewichtungswert kann insbesondere mit dem aus der Analyse der Abstände ermittelten Nutzbarkeitsergebnis multipliziert werden, das ein Teilergebnis sein kann. Auf diese Weise kann der Einfluss der Abstandsanalyse auf das Gesamtergebnis der Nutzbarkeitsbewertung von dem Anteil der nicht nutzbaren Matrixelemente abhängen. Das Gesamtergebnis der Nutzbarkeitsbewertung kann außerdem unmittelbar von dem Anteil der nicht nutzbaren Matrixelemente abhängen. Das Gesamtergebnis hängt in diesem Fall also einerseits unmittelbar von dem Anteil der nicht nutzbaren Matrixelemente ab und andererseits von dem gewichteten Ergebnis der Abstandsanalyse ab.

Das erfindungsgemäße Verfahren ist insbesondere dann mit Vorteil einsetzbar, wenn die zweiten Matrixelemente aus Strahlungsmesswerten von Wolken gebildet sind. Es steht somit ein Bewertungsverfahren zur Verfügung, das beispielsweise zusätzlich zu der Bestimmung der Wolkenbedeckung angewendet werden kann und daher eine zuverlässige objektive Bewertung der Nutzbarkeit auch bei mittelgroßen Wolkenbedeckungen liefert.

Die Erfindung ist jedoch nicht auf das Feststellen bzw. die Bewertung der Nutzbarkeit von Fernerkundungsdaten beschränkt. Vielmehr kann sie auch bei entsprechenden Problemstellungen wie beispielsweise der Bewertung der Nutzbarkeit von anderen Bilddaten angewendet werden. Z. B. können Bilddaten, die während der Ausführung von industriellen Produktionsprozessen gewonnen werden, in gleicher Weise ausgewertet werden. Solche Bilddaten sind beispielsweise deshalb nur teilweise nutzbar, weil der Raum zwischen einem Objekt der Bilderkennung und einem Messsensor (etwa durch schwebende Partikel) verschmutzt ist und/oder weil störendes Licht auf das Objekt einfällt und von dem Objekt in Richtung des Messsensors reflektiert wird. Auch ist es denkbar, das erfindungsgemäße Verfahren der Bestimmung und Auswertung von Abständen zur Strukturerkennung in Produktionsprozessen, beispielsweise zum Zweck der Qualitätskontrolle, einzusetzen.

Die Verwendung der Bildmatrix zur Bewertung der Nutzbarkeit hat den Vorteil, dass sie nur geringen Rechenaufwand erfordert. Da die Übertragung von Fernerkundungsdaten von einem Erdsatelliten zu einer Bodenstation in vielen Fällen zeitlich sehr stark begrenzt ist und andererseits für eine Vorbearbeitung der aufgenommenen Bilddaten in dem Satelliten nur wenig Zeit zur Verfügung steht, kann das erfindungsgemäße Verfahren zu einer deutlichen Erhöhung der Übertragungsrate von nutzbaren Bilddaten führen. Der Satellit kann hierzu in der geringen zur Verfügung stehenden Zeit eine Bewertung der Nutzbarkeit von aufgenommenen Daten durchführen und dementsprechend die am besten nutzbaren Daten auslesen und zu der Bodenstation übertragen.

Insbesondere wenn Bilddaten von wasserbedeckten Oberflächenbereichen und Landflächen separat ausgewertet werden sollen, können kartographische Daten zur Bestimmung der Grenzen der Oberflächenbereiche herangezogen werden. Für Daten, die von Satelliten aufgenommen werden, stehen jedoch in der Regel keine geeigneten kartographischen Daten zur Verfügung, da die Blickrichtung der Sensoren des Satelliten schräg zu der Oberflächennormalen des Planeten verläuft. Es ist daher üblich, die gewonnenen Bilddaten zu transformieren und anschließend mit den vorhandenen kartographischen Daten die Oberflächenbereiche und Grenzlinien in dem transformierten Bild zu bestimmen. Nachteilig daran ist die hohe dafür benötigte Rechenleistung und die hohe dafür benötigte Speicherkapazität für Daten.

Es wird daher vorgeschlagen, umgekehrt die vorhandenen kartographischen Daten zu transformieren und/oder zu bearbeiten, sodass aus den entsprechend aufbereiteten kartographischen Daten die gewünschten Informationen für die Bildmatrix zur Verfügung stehen. Die im Folgenden beschriebene Lösung kann unabhängig von der zuvor beschriebenen Bewertung der Nutzbarkeit von Bilddaten angewendet werden:

Gemäß einer Ausgestaltung des vorgeschlagenen Verfahrens

- entspricht eine Bildmatrix oder eine andere Bilddarstellung einem Bild, das eine Oberfläche eines Planeten zeigt und das von oberhalb der Oberfläche des Planeten aufgenommen wurde,
- stehen kartographische Daten von der Oberfläche des Planeten zur Verfügung und
- wird ein Kartenbereich der kartographischen Daten transformiert und/oder bearbeitet, sodass kartographische Merkmale des Kartenbereichs in die Bildmatrix eingetragen werden können.

Dementsprechend wird Folgendes für eine Vorrichtung vorgeschlagen: Die Vorrichtung weist eine Verarbeitungseinrichtung zur Verarbeitung von kartographischen Daten von einer Oberfläche eines Planeten auf, wobei die Verarbeitungseinrichtung ausgestaltet ist, einen Kartenbereich der kartographischen Daten zu transformieren und/oder zu bearbeiten, sodass kartographische Merkmale des Kartenbereichs in die Bildmatrix eingetragen werden können.

Insbesondere können Positionen der kartographischen Merkmale in der Bildmatrix bestimmt werden, wobei dritte Abstände der ersten Matrixelemente zu den Positionen ermittelt werden und wobei unter Verwendung der dritten Abstände automatisch die Nutzbarkeit der Bildmatrix bewertet wird.

Bei der Vorrichtung kann die Abstands-Bestimmungseinrichtung ausgestaltet sein, dritte Abstände zwischen den ersten Matrixelementen und Positionen der kartographischen Merkmale in der Bildmatrix zu ermitteln, wobei die Bewertungseinrichtung ausgestaltet ist, unter Verwendung der dritten Abstände automatisch die Nutzbarkeit der Bildmatrix zu bewerten.

Von der Erfindung ist ferner ein Computerprogramm zum Feststellen einer Nutzbarkeit von Fernerkundungsdaten umfasst, wobei Programmcode-Mittel des Computerprogramms ausgestaltet sind, das erfindungsgemäße Verfahren in zumindest einer seiner Ausgestaltungen auszuführen. Insbesondere können die Programmcode-Mittel auf einem computerlesbaren Datenträger gespeichert sein. Weiterhin gehört zum Umfang der Erfindung ein Datenträger und/oder ein Computersystem, auf dem eine Datenstruktur gespeichert ist, die nach einem Laden in einen Arbeits- und/oder Hauptspeicher eines Computers oder Computer-Netzwerkes das Computerprogramm ausführt.

Die Erfindung wird nun anhand von Ausführungsbeispielen näher erläutert. Dabei wird Bezug auf die beigefügte Zeichnung genommen. Die einzelnen Figuren der Zeichnung zeigen:

Fig. 1    ein Flussdiagramm, das einen Prozess der Aufbereitung von Satellitendaten und die Bewertung deren Nutzbarkeit zeigt,

Fig. 2    eine Ergebnismatrix mit Abständen von Matrixelementen einer Referenzmatrix zu Rändern der Referenzmatrix und zu Rändern von Teilbereichen der Referenzmatrix,

Fig. 3    eine zweite Ergebnismatrix mit Abständen von Matrixelementen einer Bildmatrix zu Rändern der Bildmatrix, zu Rändern von Teilbereichen der Bildmatrix und zu Matrixelementen mit nicht oder nur eingeschränkt nutzbaren Informationen,

Fig. 4    eine schematische Darstellung einer Bestimmung von Minima der Abstände von Matrixelementen zur Erstellung von Ergebnismatrizen ähnlich der in Fig. 3 und Fig. 2 dargestellten Matrizen,

Fig. 5    einen Prozessschritt der Analyse von Fernerkundungsdaten im Detail,

Fig. 6-10    Karten zur Darstellung der Aufbereitung von kartografischen Daten für die Nutzung in einer Bildmatrix,

Fig. 11    eine schematische Darstellung einer gleichmäßigen Wolkenverteilung,

Fig. 12    eine schematische Darstellung einer anderen Wolkenverteilung bei gleicher Wolkenbedeckung einer Planetenoberfläche wie in Fig. 11 und

Fig. 13    die Datennutzbarkeit eines Bildes in Abhängigkeit des Prozentsatzes nicht nutzbarer Matrixelemente für verschiedene maximale Distanzen zwischen nicht nutzbaren Matrixelementen und nutzbaren Matrixelementen.

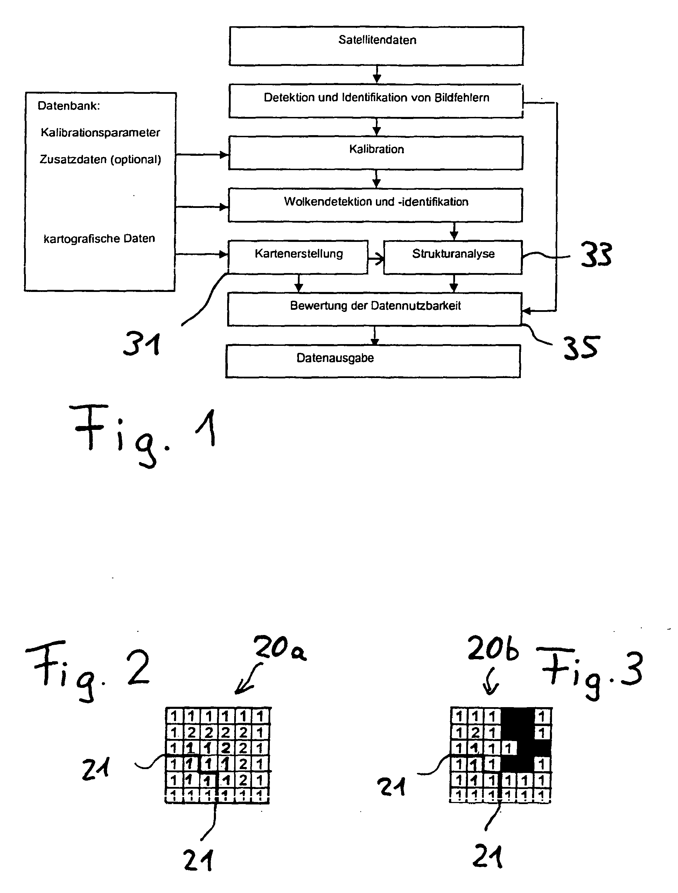

Das in Fig. 1 dargestellte Flussdiagramm zeigt einzelne Prozessschritte, die jedoch auch als Einheiten einer Vorrichtung zur Verarbeitung von Satellitendaten und zur Bewertung deren Nutzbarkeit aufgefasst werden können. In einem Prozessschritt werden Satellitendaten gewonnen, insbesondere von dem Satelliten aufgenommene Fernerkundungsdaten einer Planetenoberfläche. Die Satellitendaten können beispielsweise als Bilder der Planetenoberfläche

aufgenommen werden, die jeweils einen beschränkten Bereich der Planetenoberfläche darstellen. Insbesondere können für dieselben Bildeinheiten und/oder Bildpunkte mehrere Messwerte vorliegen, die auftreffender elektromagnetischer Strahlung in verschiedenen Frequenzbereichen entsprechen. Beispielsweise weist ein Satellit Sensoren für die Messung von elektromagnetischer Strahlung in mehreren Frequenzbändern auf, die im sichtbaren Spektralbereich, im nahen Infrarotbereich und in ferneren Infrarotbereichen liegen.

In einem optionalen zweiten Prozessschritt, der auf den ersten Prozessschritt folgen kann, werden Bildfehler der aufgenommenen Satellitendaten detektiert und identifiziert. Wiederum optional kann unmittelbar auf diesen zweiten Prozessschritt eine Bewertung der Datennutzbarkeit auf Grundlage der identifizierten Bildfehler erfolgen. Beispielsweise kann bei erheblichen Bildfehlern entschieden werden, dass ein aufgenommenes Bild nicht oder nur eingeschränkt nutzbar ist.

Wenn nicht unmittelbar mit der Bewertung der Datennutzbarkeit fortgesetzt wird, folgt eine Kalibration der aufgenommenen Satellitendaten. Eine solche Kalibration kann insbesondere in an sich bekannter Weise durchgeführt werden, wobei z.B. Offset und Verstärkungskoeffizienten der verwendeten Sensoren berücksichtigt werden, Strahldichten der gemessenen elektromagnetischen Strahlung berechnet werden, eine planetare Albedo aus den Messwerten bestimmt wird, eine Temperatur der beobachteten Planetenoberfläche aus den Messdaten ermittelt wird und/oder eine andere Verarbeitung der Satellitendaten stattfindet. Dabei kann auf in einer Datenbank abgelegte Kalibrationsparameter und auf optionale Zusatzdaten zurückgegriffen werden, die beispielsweise in einem Datenspeicher abgespeichert sind.

In einem folgenden vierten Prozessschritt wird nach der Kalibration eine Wolkendetektion und -identifikation durchgeführt, wobei auch dieser Prozessschritt auch zu einem anderen Zeitpunkt ausgeführt werden kann. Insbesondere kann dieser Prozessschritt in an sich bekannter Weise durchgeführt werden, wobei z.B. für jedes Bild eine Wolkenbedeckung ermittelt wird. Hierbei kann auf Daten aus dem Datenspeicher zurückgegriffen werden.

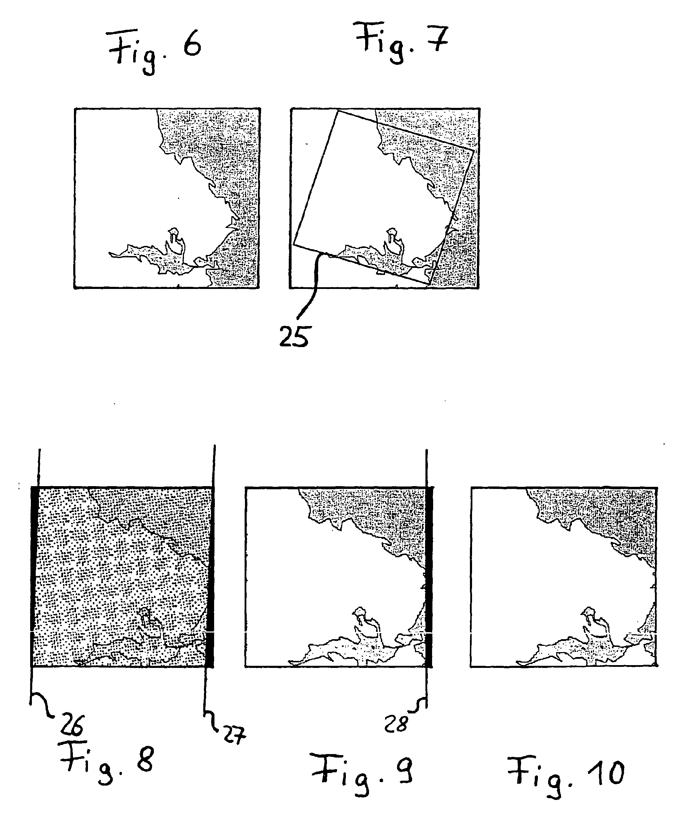

In einem weiteren Prozessschritt, der parallel zu den bereits beschriebenen Prozessschritten ausgeführt werden kann, wird speziell für die Bewertung der Datennutzbarkeit eine Aufbereitung vorhandener kartographischer Daten vorgenommen, die in Fig. 1 mit dem Begriff Kartenerstellung bezeichnet ist. Bei einer Vorrichtung zur Bewertung der Datennutzbarkeit ist hierzu eine Verarbeitungseinrichtung 31 vorgesehen zur Verarbeitung der kartographischen Daten. Eingangsdaten dieses Prozessschrittes bzw. der Verarbeitungseinrichtung 31 sind beispielsweise in dem genannten Datenspeicher abgelegt. Auf ein Beispiel der Verarbeitung der kartografischen Daten wird noch unter Bezugnahme auf die Fig. 6 bis 10 näher eingegangen. Auch die Kartenerstellung ist jedoch nicht zwingend für die erfindungsgemäße Bewertung der Datennutzbarkeit erforderlich.

Auf den optionalen Schritt der Bearbeitung kartographischer Daten folgt einerseits eine in Fig. 1 unter dem Stichwort "Strukturanalyse" bezeichnete Ermittlung einer Größe von auswertbaren Bildbereichen und andererseits eine Bewertung der Datennutzbarkeit. Die aufbereiteten kartographischen Daten können also sowohl bei der Strukturanalyse als auch unmittelbar bei der Bewertung der Datennutzbarkeit verwendet werden.

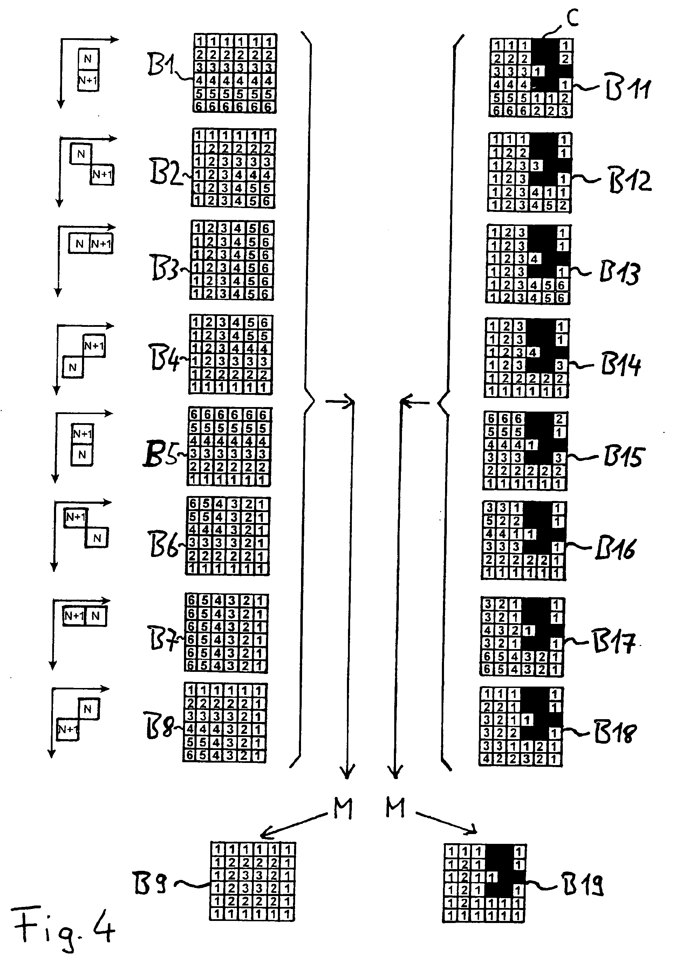

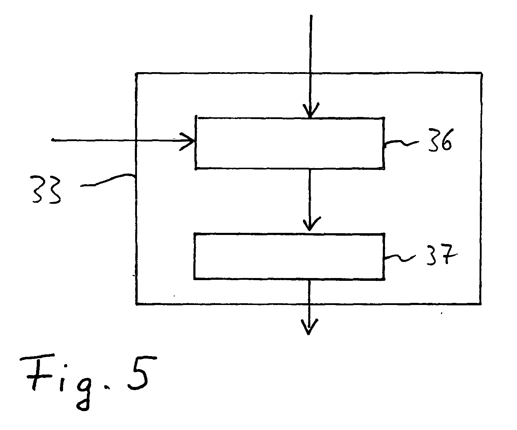

In dem Schritt der Strukturanalyse, auf den noch anhand der Fig. 2 bis 5 näher eingegangen wird, wird die Struktur der vorliegenden Bilddaten im Hinblick auf eine Bewertung der Datennutzbarkeit der Bilddaten aufbereitet. Fig. 1 gibt - wie bereits erwähnt - auch den schematischen Aufbau einer Vorrichtung zum Feststellen einer Nutzbarkeit von Fernerkundungsdaten wieder, wobei der Schritt der Strukturanalyse einer Analyseeinrichtung 33 entspricht. Wie Fig. 5 in Verbindung mit Fig. 1 zeigt, kann die Analyseeinrichtung 33 beispielsweise eine Matrix-Erstellungseinrichtung 36 aufweisen, die eingangsseitig mit der Verarbeitungseinrichtung 31 zur Verarbeitung von kartographischen Daten sowie ebenfalls eingangsseitig mit einer Einrichtung zum Detektieren und Identifizieren von Wolken in den Bilddaten verbunden ist. Ausgangsseitig ist die Matrix-Erstellungseinrichtung 36 mit einer Abstands-Bestimmungseinrichtung 37 verbunden, die ausgestaltet ist, Abstände zwischen Matrixelementen zu ermitteln und/oder zwischen ersten Matrixelementen einerseits und Positionen und/oder Rändern der Matrix andererseits. Auf die Bestimmung der Abstände wird noch näher anhand von Fig. 4 eingegangen. Die Matrixerstellung kann jedoch ganz oder teilweise bereits vor dem Schritt der Strukturanalyse erfolgen, nämlich beispielsweise bereits vor dem zweiten Schritt, in dem Bildfehler detektiert und identifiziert werden. Die Abstands-Bestimmungseinrichtung 37 ist ausgangsseitig mit einer Einrichtung zur Bewertung der Datennutzbarkeit 35 verbunden (siehe Fig. 1). Auf die von dieser Einrichtung durchgeführte Bewertung der Datennutzbarkeit folgt eine Datenausgabe (und optional eine Speicherung) von Informationen über die Nutzbarkeit der Daten.

Auf ein besonders bevorzugtes Ausführungsbeispiel des erfindungsgemäßen Verfahrens wird nun unter Bezugnahme auf Fig. 2 bis 4 eingegangen. Die schematische Darstellung in Fig. 4 geht von dem Vorliegen einer Bildmatrix aus, wobei für jedes der Matrixelemente ermittelt wurde, ob sie für eine (optional vordefinierte) spätere Nutzung nutzbar sind. Die Bestimmung der Nutzbarkeit der Matrixelemente erfolgt beispielsweise in dem bereits beschriebenen Schritt der Kalibration (Fig. 1). Beispielsweise ist ein Matrixelement nutzbar, wenn es einen Messwert elektromagnetischer Strahlung aufweist, der Informationen über einen Bereich einer Planetenoberfläche aufweist. Befindet sich dagegen zwischen der Planetenoberfläche und dem Messsensor in einem Bildbereich, der dem Matrixelement zugeordnet ist, eine Wolke, weist das Matrixelement lediglich einen Messwert von Strahlung auf, der Informationen über die Wolke, nicht aber über die Planetenoberfläche enthält. Diese Entscheidung, ob ein Matrixelement nutzbar ist, kann unter Anwendung an sich bekannten Verfahren getroffen werden, die beispielsweise die unterschiedliche Temperatur von Wolken und Bereichen an der Planetenoberfläche berücksichtigen. Dabei können insbesondere Informationen von einer Mehrzahl von Messsensoren verwendet werden, die in unterschiedlichen Frequenzbereichen messen.

Der Einfachheit halber wurde für die Darstellung der Fig. 4 angenommen, dass die zweidimensionale Bildmatrix quadratisch ist und lediglich pro Zeile und pro Spalte jeweils 6 Matrixelemente aufweist. Die in Fig. 4 dargestellten Matrizen sind jedoch nicht die Bildmatrizen, sondern Ergebnismatrizen mit Zwischenergebnissen und Endergebnissen einer im Folgenden beschriebenen Auswertung. Die Ergebnismatrizen weisen als Matrixelemente Abstände des jeweiligen zugeordneten Matrixelements der Bildmatrix zu anderen Matrixelementen, zu Rändern der Bildmatrix und bei der in Fig. 2 und Fig. 3 dargestellten Variante zu ausgezeichneten Positionen in der Bildmatrix auf.

Rechts in Fig. 4 sowie in Fig. 3 ist ein bestimmter Bereich von Matrixelementen geschwärzt. Diese Matrixelemente entsprechen Matrixelementen in der Bildmatrix, die nicht für eine definierte spätere Auswertung nutzbar sind (beispielsweise einem Wolkenbereich entsprechen). In dem in Fig. 4 gezeigten Ausführungsbeispiel wird nun für jedes Matrixelement der Abstand zu dem nicht nutzbaren Bereich von Matrixelementen (mit den zweiten Matrixelementen) und zu den Rändern der Matrix ermittelt, je nachdem welcher Abstand der kürzeste ist. Hierzu wird zunächst in einem ersten Verarbeitungsschritt der jeweilige Abstand der Matrixelemente zu dem oberen oder zu einem in Richtung nach oben davor liegenden nicht nutzbaren Matrixelement der Bildmatrix ermittelt. Die Ergebniswerte sind in der Ergebnismatrix B11 rechts oben in Fig. 4 eingetragen. Der Bereich nicht nutzbarer Matrixelemente der Bildmatrix ist in Matrix B11 mit C bezeichnet.

Aus Gründen, die noch näher erläutert werden, wird die Abstandsberechnung außerdem jeweils für eine Referenzmatrix durchgeführt. In dieser hypothetischen Referenzmatrix sind alle Bildelemente nutzbar. Dementsprechend fehlt ein geschwärzter Bereich. Ist die Größe der Bildmatrix und damit auch die Größe der Referenzmatrix bekannt, kann diese Abstandsbestimmung für die Referenzmatrix einmal durchgeführt werden und können entsprechende Berechnungsergebnisse als Referenz für jegliche gleichgroße Bildmatrizen gespeichert werden. Die Berechnung der Abstände für die Referenzmatrix kann dann in Zukunft entfallen.

Anschließend wird die Berechnung der Abstände der Matrixelemente zu dem Rand der Bildmatrix bzw. zu einem in einer definierten Richtung davor liegenden nicht nutzbaren zweiten Matrixelement für weitere (hier: 7) ausgezeichnete Richtungen durchgeführt. Im Ausführungsbeispiel der Fig. 4 ist dies durch eine Spalte von Operatoren dargestellt, die jeweils durch ein Koordinatensystem mit zwei benachbarten beliebigen Matrixelementen symbolisiert sind. Die Operatoren sind richtungsbezogene Operatoren, die für die (durch die zwei Matrixelemente N" und "N+1") definierte Richtung alle nutzbaren Matrixelemente durchlaufen und bei dem Wert eins beginnend jeweils dann den Wert des nächsten Matrixelements um eins erhöhen, wenn sich zwischen den in der Richtung aufeinander folgenden Matrixelementen kein Rand der Matrix, eine ausgezeichnete (markierte) Position der Matrix oder ein nicht nutzbares Matrixelement befindet. Ist dies jedoch der Fall, wird bei dem nächsten der in der Richtung aufeinander folgenden Matrixelemente wieder mit dem Wert eins begonnen.

In dem in Fig. 4 dargestellten Ausführungsbeispiel wird die beschriebene Auswertung der Abstände in den acht Richtungen durchgeführt, die durch die Zeilen, Spalten und Diagonalen der quadratischen Matrix definiert sind. Hierdurch entstehen die acht Ergebnismatrizen B1 bis B8 für die Referenzmatrix und die acht Ergebnismatrizen B11 bis B18 für die Bildmatrix. Anschließend wird jeweils für die acht Ergebnismatrizen B1 bis B8 und B11 bis B18 das Minimum der Abstandswerte für jedes der Matrixelemente bestimmt. Dies ist durch den Minimumoperator M in Fig. 4 dargestellt. Es werden die Ergebnismatrizen B9 für die Referenzmatrix und B19 für die Bildmatrix erhalten. Diese Ergebnismatrizen B9, B19 weisen folglich für jedes Matrixelement den minimalen Abstand zu einem Rand der Matrix oder zu einem zweiten Matrixelement auf.

In der in Fig. 2 und Fig. 3 dargestellten Variante sind ebenfalls die Ergebnismatrizen mit den minimalen Abständen der Matrixelemente dargestellt, jedoch für einen modifizierten Fall, bei dem die Matrix in verschiedene Teilbereiche unterteilt ist (hier in zwei Teilbereiche). Die Grenze zwischen den Teilbereichen ist durch eine Trennlinie 21 in der Matrix dargestellt, die sich in dem linken unteren Viertel der Matrix erstreckt. Die Trennlinie entspricht beispielsweise einer Grenzlinie des beobachteten Gebietes auf der Planetenoberfläche von einem Wassergebiet einerseits und von einem Landgebiet andererseits. Z.B. wurden die Positionen der Trennlinie in dem oben beschriebenen Schritt der "Kartenerstellung" bzw. in der entsprechenden Verarbeitungseinrichtung 31 erzeugt.

Dementsprechend enthält die Ergebnismatrix 20a gemäß Fig. 2, die sich auf die Referenzmatrix bezieht, nur noch Matrixelemente, die höchstens zwei Einheiten von dem Rand der Matrix oder von der Trennlinie entfernt sind. Die Ergebnismatrix 20b gemäß Fig. 3, die der Bildmatrix zugeordnet ist, enthält nur noch ein Matrixelement, das zwei Einheiten von dem Rand der Matrix, der Trennlinie oder dem Gebiet nicht nutzbarer Matrixelemente entfernt ist. Alle anderen Matrixelemente enthalten den Wert eins. Durch die Aufteilung in verschiedene Teilgebiete der Matrix bzw. des beobachteten Gebiets kann eine getrennte Auswertung für die Teilgebiete vorgenommen werden.

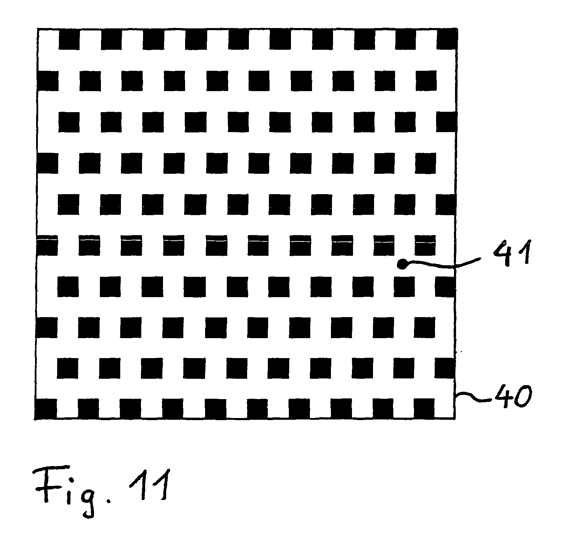

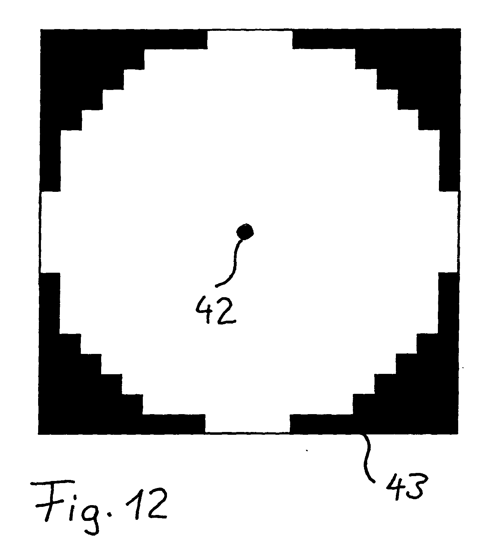

Durch die Auswertung der Abstände oder allgemeiner durch die Auswertung von linearen Abmessungen der für eine Datennutzung nutzbaren Bildmatrixgebiete kann insbesondere zusätzlich zu einer Wolkenbedeckung ein aussagekräftiges Bewertungsmaß ermittelt werden. Dies ist nochmals aus der Darstellung der Fig. 11 und 12 entnehmbar. Diese Figuren zeigen schematisch jeweils eine Situation eines beobachteten Gebietes, wobei die Teilgebiete dunkel dargestellt sind, die nicht für eine Auswertung nutzbar sind. Dagegen sind die hellen Teilgebiete in den Bildern 40 (Fig. 11) und 43 (Fig. 12) Gebiete, für die nutzbare Daten vorhanden sind. Der Anteil der nicht nutzbaren Gebiete ist in den Situationen gemäß Fig. 11 und Fig. 12 gleich groß (hier: 25 % nicht nutzbare Fläche). Bei der in Fig. 11 dargestellten Situation ist ein Punkt der nutzbaren Fläche mit dem Bezugszeichen 41 bezeichnet. Er liegt etwa in der Mitte zwischen drei benachbarten Teilgebieten mit nicht nutzbaren Informationen. Sein Abstand zu den nicht nutzbaren Flächen liegt in der Größenordnung von einem Zehntel der Kantenlänge des erfassten Gebietes, das in Fig. 11 dargestellt ist. In Fig. 12 ist ein Punkt 42 dargestellt, der ebenfalls etwa in der Mitte eines Gebietes mit nutzbaren Daten liegt. Sein Abstand zu den nicht nutzbaren Flächen beträgt jedoch etwa die Hälfte der Kantenlänge der in Fig. 12 dargestellten Situation. Bei gleichem Anteil der Flächen, für die keine nutzbaren Informationen vorliegen, sind die ungestörten (nutzbaren) Teilgebiete in der Situation in Fig. 11 sehr klein und in der Situation von Fig. 12 annähernd so groß wie die gesamte beobachtete Fläche. Das beschriebene Verfahren, das die Größe der Gebiete mit ausschließlich nutzbaren Informationen durch lineare (d.h. eindimensionale) Größenangaben bewertet, liefert also eine wertvolle und zuverlässige Aussage über die Nutzbarkeit.

Im Folgenden wird ein besonders bevorzugtes Ausführungsbeispiel für eine Berechnung von Bewertungsgrößen beschrieben, wobei anhand der Bewertungsgrößen unmittelbar die Nutzbarkeit bestimmt werden kann. Insbesondere liefern einzelne oder alle der Bewertungsgrößen einen Zahlenwert, der auf einer Skala von Nutzbarkeitszahlen liegt.

Eine erste Bewertungsgröße berücksichtigt lediglich den Anteil nutzbarer Gebiete an einem Gesamtgebiet, das beobachtet wurde. Diese erste Bewertungsgröße ist beispielsweise die oben definierte Wolkenbedeckung. Die Bewertungsskala läuft daher von 0 bis 1 bzw. von 0 bis 100 %.

Eine zweite Bewertungsgröße wird wie folgt definiert:

$$B_2 = \left( \frac{D_A - D_{Max}}{D_A} \right)$$

wobei $B_2$ die Bewertungsgröße ist, $D_A$ eine Referenzlänge (d.h. eine räumlich eindimensionale Größe eines Gebietes, das beobachtet wurde) und $D_{Max}$ ein durch die erfindungsgemäße Nutzbarkeitsanalyse bestimmter Längenwert eines zusammenhängendes Gebietes mit ausschließlich nutzbaren Informationen, wobei das Gebiet Teil des beobachteten Gebietes ist. Beispielsweise ist $D_A$ der Maximalwert der Ergebnismatrizen B9 bzw. 20a in den Ausführungsbeispielen von Fig. 4 und Fig. 2. Weiterhin ist $D_{Max}$ beispielsweise der größte Wert der Matrizenelemente der Ergebnismatrix B19 gemäß Fig. 4 oder der Ergebnismatrix 20b gemäß Fig. 3. Alternativ kann $D_A$ der Mittelwert der Matrizenelemente der Ergebnismatrix B9 oder der Ergebnismatrix 20a sein und kann $D_{Max}$ der Mittelwert der Matrizenelemente der Ergebnismatrix B19 oder der Ergebnismatrix 20b sein. Im Fall der Ergebnismatrizen gemäß Fig. 2 und Fig. 3 wird dabei zwischen den verschiedenen Teilgebieten unterschieden, die durch die Trennlinie 21 voneinander getrennt sind.

Die Ergebnismatrizen der Fig. 2 bis 4 können auch in anderer Weise ausgewertet werden. Unabhängig davon, ob die zweite Bewertungsgröße $B_2$ bestimmt wird, können z.B. verschiedene Mittelwerte, Summenwerte und/oder Kombinationen davon aus den Matrizenelementen der Ergebnismatrizen berechnet werden. Dabei kann auch auf die Verwendung von Referenzmatrizen bzw. Referenzsituationen verzichtet werden. Beispielsweise können die Abstände, die für die Bildmatrix berechnet werden, in absoluten Längendimensionen angegeben werden. Auf dieser Basis kann z. B. eine dritte Bewertungsgröße wie folgt definiert sein:

$$B_3 = \left( \frac{\sum D_A - \sum D_{Max}}{\sum D_A} \right)$$

wobei das Summenzeichen die Summierung über alle Matrixelemente einer Ergebnismatrix oder eines Teilbereichs einer Ergebnismatrix symbolisiert und wobei $D_A$ sowie $D_{Max}$ wiederum die zuvor beschriebene Bedeutung haben.

Um eine besonders gut geeignete kombinierte Bewertungsgröße BQ zu erhalten, kann aus den bereits beschriebenen Bewertungsgrößen folgendes ermittelt werden.

$$BQ = \left( B_1 * w_1 + B_2 * w_2 + B_3 * w_3 \right)$$

wobei $w_1$, $w_2$, $w_3$ Gewichtungsfaktoren sind, die je nach Aufgabenstellung verschieden gewählt werden können. $B_1$ ist dabei die Wolkenbedeckung. Bei einer Variante können verschiedene Teilgebiete einer beobachteten Szene für sich getrennt gemäß der zuvor angegebenen Gleichung bewertet werden und kann eine wiederum gewichtete Summe der Bewertungen der Teilgebiete für eine Gesamtbewertung ermittelt werden.

Die Auswertung von Teilgebieten und/oder die separate Auswertung einer Mehrzahl von Matrizen, die jeweils einem Teilgebiet entsprechen, sind auch bei anderen Ausführungsformen der vorliegenden Erfindung zur Bewertung der Nutzbarkeit möglich.

Unter Bezugnahme auf Fig. 13 wird nun eine besonders bevorzugte Ausführungsform der Nutzbarkeitsbewertung beschrieben.

Es wird insbesondere davon ausgegangen, dass der Auswertung eine korrekt klassifizierte Szene (Bildmatrix) zugrunde liegt, d. h. nicht nutzbare Matrixelementen und nutzbare Matrixelemente korrekt bestimmt (klassifiziert) wurden. Vor der Auswertung wird die Bildmatrix daher vorzugsweise auf Fehler der Klassifizierung überprüft.

Zunächst wird der Anteil der nicht nutzbaren Matrixelemente zu der gesamten Anzahl von Matrixelementen der Bildmatrix ermittelt und beispielsweise als Prozentsatz ausgewiesen. In Fig. 13 ist dieser Prozentsatz auf der horizontalen Diagramm-Achse aufgetragen.

Auf der vertikalen Diagramm-Achse sind Datennutzbarkeitsklassen von 0 bis 9 aufgetragen. Die Nutzbarkeitsklassen (im Folgenden auch kurz: Klassen) beziehen sich auf das gesamte durch die Bildmatrix ausgewertete Bild. Dabei ist die Nutzbarkeit umso größer (besser) je kleiner die Ordnungszahl der Klasse ist. Die Datennutzbarkeitsklasse 0 enthält uneingeschränkt nutzbare Bilder. Die Datennutzbarkeitsklasse 9 enthält unbrauchbare (nicht nutzbare) Bilder.

Die gerade, mit zunehmenden Prozentsätzen aufsteigende Linie in Fig. 13 wird als Basislinie bezeichnet. Die Basislinie durchläuft die Punktepaare (0 %; Klasse 0) und (100 %; Klasse 9). Unterhalb der Basislinie können keine Ergebnisse einer Datennutzbarkeitsanalyse liegen. Anders ausgedrückt sind die Daten eines Bildes mindestens so schlecht nutzbar wie der für den entsprechenden Prozentsatz auf der Basislinie liegenden Punktes. Beispielsweise ist die Datennutzbarkeit bei einem Prozentsatz von ca. 33 Prozent nicht nutzbarer Matrixelemente mindestens in Klasse 3. Beispielsweise können Ergebnisse mit dem Dezimalwert einer Klassenangabe (z. B. Dezimalwert 0, 43 bei Klassenangabe 3,43) ab 0,5 der nächst höheren Klasse zugeordnet werden. Z. B. wird der Wert 3,49 der Klasse 3 zugeordnet, während der Wert 3,5 der Klasse 4 zugeordnet wird.

Je gleichmäßiger die nicht nutzbaren Matrixelemente über die Fläche der Matrix verteilt sind, desto höher ist die Ordnungszahl der bei einem gegebenen Prozentsatz nicht nutzbarer Matrixelemente relevanten Klasse.

In Fig. 13 sind für das Beispiel einer Bildmatrix mit 1000 mal 1000 Matrixelementen zusätzlich zu der Basislinie drei Kurven eingezeichnet. Jede der Kurven entspricht dem Fall, dass der maximale Abstand (bzw. die maximale Distanz) zwischen nicht nutzbaren Matrixelementen und nutzbaren Matrixelementen der auszuwertenden Bildmatrix einen bestimmten Wert hat. Bei der am nächsten an der Basislinie liegenden Kurve, die durch Punkte dargestellt ist, beträgt der Abstands-Wert 200 Matrixelemente. Bei der mittleren, gestrichelten Kurve beträgt der Abstands-Wert 100 Matrixelemente. Bei der oberen, gestrichelten und punktierten Kurve beträgt der Abstands-Wert 50 Matrixelemente. Entsprechende weitere Kurven für andere Abstands-Werte könnten eingezeichnet werden. Die Kurven geben somit den Einfluss der Flächenstruktur der nicht nutzbaren Matrixelemente wieder.

Fig. 13 geht von dem speziellen Fall aus, dass die nicht nutzbaren Matrixelemente aus dem Grund nicht nutzbar sind, weil sie einem mit Wolken bedeckten Bereich einer Planetenoberfläche entsprechen. Das Beispiel kann jedoch allgemein auf die Bewertung der Nutzbarkeit von Bildern übertragen werden, auch wenn die Matrixelemente aus anderen Gründen oder zusätzlich aus anderen Gründen nicht nutzbar sind.

Die Kurven wurden insbesondere nach folgendem Verfahren berechnet, das für eine Auswertung der Datennutzbarkeit eines Bildes besonders bevorzugt wird:

Zur Berechnung eines Gewichtungsfaktors wird für jede Szene (für jedes auszuwertende Bild) die Anzahl der nicht nutzbaren Matrixelemente und die Anzahl der nutzbaren Matrixelemente nach folgender Gleichung zueinander in Beziehung gesetzt. Durch den Faktor 4 ist der ermittelte Gewichtungswert im Intervall [0; 1] normiert.

$$W = \frac{4(M * N)}{S^2}$$

Dabei ist $S$ die Summe der Anzahl der nutzbaren und nicht nutzbaren Matrixelementen, ist $M$ die Anzahl der nicht nutzbaren Matrixelemente und $N$ die Anzahl der nutzbaren Matrixelemente. Andere Gewichtungsfaktoren sind möglich, die z. B. unter Verwendung einer anderen statistischen Größe, etwa einer Coocurrence Matrix und/oder der Ableitung von Texturmaßen berechnet werden.

Der Gewichtungswert $W$ erlaubt eine Korrektur eines Phänomens, das die erfindungsgemäße Bestimmung des maximalen Abstandes zwischen nicht nutzbaren Matrixelementen und nutzbaren Matrixelementen mit sich bringt.

Ohne die Korrektur wäre bei einem sehr geringen oder bei einem sehr großen Anteil von nicht nutzbaren Matrixelementen die Position der nicht nutzbaren Matrixelemente relativ zu den Rändern der Matrix entscheidend für das Ergebnis. Läge z. B. ein einziges nicht nutzbares Matrixelement genau in der Mitte der Bildmatrix würde dies den maximalen Abstand auf die Hälfte reduzieren. Läge das einzige nicht nutzbare Matrixelement dagegen am Rand der Matrix, hätte dies fast keinen Einfluss auf den bestimmten maximalen Abstand.

Z. B. wird mit diesem Gewichtungswert $W$ je nach Bewertungsziel entweder die oben definierte zweite Bewertungsgröße $B_2$ oder die oben definierte dritte Bewertungsgröße $B_3$ multipliziert und als Prozentsatz ausgewiesen. Die zweite Bewertungsgröße $B_2$ ist von der Größe der größten zusammenhängenden Fläche nutzbarer Matrixelemente abhängig. Die dritte Bewertungsgröße $B_3$ ist von der Summe der Größen aller zusammenhängenden Flächen von nutzbaren Matrixelementen abhängig. Man erhält die mit dem Gewichtungsfaktor $W$ multiplizierten Bewertungsgrößen $SA_2$ bzw. $SA_3$:

$$SA_2 = (B_2 * W)$$

und/oder

$$SA_3 = (B_3 * W)$$

Die so gewichteten Bewertungsgrößen (oder zumindest eine davon) werden anschließend auf den Anteil (definiert im Intervall [0; 1]) der nutzbaren Matrixelemente angewendet. Unter Verwendung der oben bereits genannten Größe Wolkenbedeckung $B_1$ (bzw. allgemeiner: Anteil der nicht nutzbaren Matrixelemente) ist der verbleibende Anteil der nutzbaren Matrixelemente gleich $(1 - B_1)$. In Bezug auf Fig. 13 ermöglicht die Gewichtung somit eine Quantifizierung des Einflusses der Wolkenverteilung (Strukturanalyse) oberhalb der Basislinie.

Als ein möglicher Ansatz zur Berechnung eines Gesamtergebnisses $BQ$ der Datennutzbarkeit eines Bildes seien folgende Ansätze genannt:

$$BQ = ((B_1 + (1 - B_1)SA_2) * 100\%) * \left( \frac{NB - 1}{NB} \right)$$

bzw.

$$BQ = ((B_1 + (1 - B_1)SA_3) * 100\%) * \left( \frac{NB - 1}{NB} \right)$$

Dabei ist $NB$ die Anzahl der Bewertungsstufen (gleich Anzahl der möglichen Ordnungszahlen) bei der Einstufung des Ergebnisses in Datennutzbarkeitsklassen. Im Beispiel der Fig. 13 gibt es 10 Datennutzbarkeitsklassen, mit den Ordnungszahlen 0 bis 9.

Anhand der Fig. 6 bis 10 wird nun ein Ausführungsbeispiel für die Aufbereitung der kartographischen Daten beschrieben. Fig. 6 zeigt kartographische Ausgangsdaten, die beispielsweise durch eine Projektion senkrecht zur Oberfläche eines Planeten erhalten wurden. Fig. 7 zeigt denselben Kartenausschnitt wie Fig. 6, wobei jedoch außerdem ein Teilgebiet 25 eingezeichnet ist, das von einem Satelliten beobachtet wird. Mit anderen Worten: Nur für das Teilgebiet 25 liegen aus einer Beobachtung Informationen vor.

In der Regel sieht ein Satellit die Planetenoberfläche nicht aus einer Richtung, die der Projektion der kartographischen Daten entspricht. Aus diesem Grund wird eine Transformation der kartographischen Daten vorgenommen. Würde umgekehrt das von dem Satelliten aufgenommene Bild entsprechend den kartographischen Daten transformiert und würde für die transformierten Bilddaten die Nutzbarkeit ermittelt, wäre der Rechenaufwand höher und würde sich die Größe der zu bearbeitenden Matrix vergrößern. Dementsprechend wäre der Aufwand für die Durchführung der Bewertung der Nutzbarkeit wesentlich höher.

Zunächst werden die Eckkoordinaten des beobachteten Teilgebietes 25 ermittelt. Anschließend wird dieses Teilgebiet 25 gedreht, so dass es einer Orientierung des aufgenommenen Bildes entspricht und z. B. zumindest ein Teil der Ränder des Teilbereichs 25 parallel zu den Zeilen oder Spalten der Bildpunkte einer Bildmatrix verlaufen. Die Ergebnissituation ist in Fig. 8 dargestellt, wobei sich das beobachtete Teilgebiet zwischen den Linien 26 und 27 befindet. Wie die Darstellung gemäß Fig. 8 zeigt, ist das beobachtete Teilgebiet in der Kartenprojektion nicht ganz rechteckig, sondern parallelogrammartig verzerrt. Für die außerhalb der Linien 26, 27 liegenden Teilgebiete liegen keine Beobachtungsdaten vor. Die außerhalb der Linien 26, 27 liegenden Teilgebiete sind keilförmig und entsprechen in dem Ausführungsbeispiel der Drehung des Planeten, während der Satellit den Planeten überfliegt.

Im nächsten Schritt wird die Drehung des Planeten eliminiert. Das Ergebnis ist in Fig. 9 dargestellt. Drei der Ränder des Kartenausschnitts stimmen nun mit dem beobachteten Gebiet überein. In der Figur ist eine Linie 28 eingezeichnet, die das mit dem beobachteten Gebiet übereinstimmende Teilgebiet des Kartenausschnitts von einem anderen Teilgebiet trennt, für das keine Beobachtungsdaten vorliegen. In dem folgenden, letzten Schritt wird das Teilgebiet abgeschnitten, für das keine Beobachtungsdaten vorliegen. Anschließend können z.B. die aus dem Kartenausschnitt erkennbaren Land-/Wassergrenzen in die Bildmatrix oder in eine entsprechende Matrix zur Auswertung von Abständen in der Bildmatrix übernommen werden.

## Patentansprüche

1. Verfahren zum Feststellen einer Nutzbarkeit von Fernerkundungsdaten, wobei Bildbereiche nicht oder nur eingeschränkt nutzbar sind, wenn in dem jeweiligen Bildbereich eine Sicht eines Sensors, mit dem die Fernerkundungsdaten gewonnen werden oder wurden, auf ein Objekt der Fernerkundung versperrt bzw. behindert ist, z. B. durch Wolken oder bodennahe Erscheinungen, und wobei

   - eine Bildmatrix aus den Fernerkundungsdaten gebildet wird oder vorliegt,
   - erste Matrixelemente der Bildmatrix nutzbare Informationen über ein oder mehrere Objekte der Fernerkundung aufweisen,
   - zweite Matrixelemente der Bildmatrix keine oder nur eingeschränkt nutzbare Informationen über das oder die Objekte der Fernerkundung aufweisen,
   - Abstände zwischen den ersten Matrixelementen und den zweiten Matrixelementen ermittelt werden (33) und
   - unter Verwendung der Abstände automatisch die Nutzbarkeit der Bildmatrix bewertet wird (35).

2. Verfahren nach dem vorhergehenden Anspruch, wobei für zumindest einen Teil der ersten Matrixelemente jeweils erste Abstände zu einem Rand der Bildmatrix und/oder zu einem Rand eines Teilbereichs der Bildmatrix und jeweils zweite Abstände zu den zweiten Matrixelementen ermittelt werden und wobei unter Verwendung der ersten und der zweiten Abstände die Nutzbarkeit der Bildmatrix bewertet wird.

3. Verfahren nach dem vorhergehenden Anspruch, wobei bei der Bewertung der Nutzbarkeit der Bildmatrix der Anteil der zweiten Matrixelemente an der Gesamtzahl der Matrixelemente berücksichtigt wird.

4. Verfahren nach einem der vorhergehenden Ansprüche, wobei für zumindest einen Teil der Matrixelemente, für die die Abstände ermittelt wurden, jeweils ein Minimum der für das Matrixelement ermittelten Abstände bestimmt wird und wobei die Nutzbarkeit der Bildmatrix unter Verwendung des Minimums bewertet wird.

5. Verfahren nach einem der vorhergehenden Ansprüche, wobei die zweiten Matrixelemente aus Strahlungsmesswerten von Wolken gebildet sind.

6. Verfahren nach einem der vorhergehenden Ansprüche, wobei

   - die Bildmatrix einem Bild entspricht, das eine Oberfläche eines Planeten zeigt und das von oberhalb der Oberfläche des Planeten aufgenommen wurde,
   - kartographische Daten von der Oberfläche des Planeten zur Verfügung stehen und
   - ein Kartenbereich der kartographischen Daten transformiert und/oder bearbeitet wird, sodass kartographische Merkmale des Kartenbereichs in die Bildmatrix eingetragen werden können.

7. Verfahren nach dem vorhergehenden Anspruch, wobei Positionen der kartographischen Merkmale in der Bildmatrix bestimmt werden, wobei dritte Abstände der ersten Matrixelemente zu den Positionen ermittelt werden und wobei unter Verwendung der dritten Abstände automatisch die Nutzbarkeit der Bildmatrix bewertet wird.

8. Vorrichtung zum Feststellen einer Nutzbarkeit von Fernerkundungsdaten, wobei Bildbereiche nicht oder nur eingeschränkt nutzbar sind, wenn in dem jeweiligen Bildbereich eine Sicht eines Sensors, mit dem die Fernerkundungsdaten gewonnen werden oder wurden, auf ein Objekt der Fernerkundung versperrt bzw. behindert ist, z. B. durch Wolken oder bodennahe Erscheinungen, und wobei die Vorrichtung aufweist:

- eine Matrix-Erstellungseinrichtung (36), die ausgestaltet ist, aus den Fernerkundungsdaten eine Bildmatrix zu erstellen, wobei erste Matrixelemente der Bildmatrix nutzbare Informationen über ein oder mehrere Objekte der Fernerkundung aufweisen und wobei zweite Matrixelemente der Bildmatrix keine oder nur eingeschränkt nutzbare Informationen über das oder die Objekte der Fernerkundung aufweisen,
- eine Abstands-Bestimmungseinrichtung (37), die ausgestaltet ist, Abstände zwischen den ersten Matrixelementen und den zweiten Matrixelementen zu ermitteln, und
- eine Bewertungseinrichtung (35), die ausgestaltet ist, unter Verwendung der Abstände automatisch die Nutzbarkeit der Bildmatrix zu bewerten.

9. Vorrichtung nach dem vorhergehenden Anspruch, mit einer Verarbeitungseinrichtung (31) zur Verarbeitung von kartographischen Daten von einer Oberfläche eines Planeten, wobei die Verarbeitungseinrichtung (31) ausgestaltet ist, einen Kartenbereich der kartographischen Daten zu transformieren und/oder zu bearbeiten, sodass kartographische Merkmale des Kartenbereichs in die Bildmatrix eingetragen werden können.

10. Vorrichtung nach dem vorhergehenden Anspruch, wobei die Abstands-Bestimmungseinrichtung (37) ausgestaltet ist, dritte Abstände zwischen den ersten Matrixelementen und Positionen der kartographischen Merkmale in der Bildmatrix zu ermitteln, und wobei die Bewertungseinrichtung (35) ausgestaltet ist, unter Verwendung der dritten Abstände automatisch die Nutzbarkeit der Bildmatrix zu bewerten.

11. Computerprogramm zum Feststellen einer Nutzbarkeit von Fernerkundungsdaten mit Programmcode-Mitteln, die ausgestaltet sind, das Verfahren gemäß einem der Ansprüche 1 bis 6 auszuführen.

12. Datenträger, auf dem eine Datenstruktur gespeichert ist, die nach einem Laden in einen Arbeits- und/oder Hauptspeicher eines Computers oder Computer-Netzwerkes das Computerprogramm nach Anspruch 11 ausführt.

**Claims**

1. Method for determining a usability of remote sensing data, wherein image regions are not useable or are only useable in a limited manner when, in the respective image region, a view of a sensor, with which the remote sensing data will be obtained or has been obtained, onto an object of the remote sensing is blocked or respectively impeded, for example by means of clouds or near-earth phenomena, and wherein

- an image matrix is formed or is present from the remote sensing data,
- first matrix elements of the image matrix include useful information concerning one or a plurality of objects of the remote sensing,
- second matrix elements of the image matrix include no useable information or only limited useable information concerning the object or the objects of the remote sensing,
- distances between the first matrix elements and the second matrix elements are determined (33) and
- the usability of the image matrix is automatically evaluated (35) by using the distances.

2. Method according to the preceding claim, wherein, for at least one part of the first matrix elements, in each case first distances to an edge of the image matrix and/or to an edge of a part region of the image matrix are determined and in each case second distances to the second matrix elements are determined and wherein the usability of the image matrix is evaluated by using the first and the second distances.

3. Method according to the preceding claim, wherein the proportion of second matrix elements in the total number of matrix elements is taken into consideration when evaluating the usability of the image matrix.

4. Method according to one of the preceding claims, wherein for at least one part of the matrix elements for which the distances have been determined, a minimum of the distances determined for the matrix elements is determined in each case, and wherein the usability of the image matrix is evaluated by using the minimum.

**5.** Method according to one of the preceding claims, wherein the second matrix elements are formed from radiation measuring values of clouds.

**6.** Method according to one of the preceding claims, wherein

- the image matrix corresponds to an image, which shows a surface of a planet and which has been taken from above the surface of the planet,
- cartographic data of the surface of the planet is available
- a map region of the cartographic data is transformed and/or processed such that cartographic features of the map region can be recorded in the image matrix.

**7.** Method according to the preceding claim, wherein positions of the cartographic features are determined in the image matrix, wherein third distances between the first matrix elements and the positions are determined and wherein the usability of the image matrix is automatically evaluated by using the third distances.

**8.** Apparatus for determining a usability of remote sensing data, wherein image regions are not useable or are only useable in a limited manner when, in the respective image region, a view of a sensor, with which the remote sensing data will be obtained or has been obtained, onto one object of the remote sensing is obstructed or respectively impeded, for example by means of clouds or near-earth phenomena, and wherein the apparatus includes:

- a matrix-creating device (36), which is designed to create an image matrix from the remote sensing data, wherein first matrix elements of the image matrix include useable information concerning one object or a plurality of objects and wherein second matrix elements of the image matrix do not include any useable information or only include limited useable information concerning the object or the objects of the remote sensing,
- a distance-determining device (37), which is designed to determine distances between the first matrix elements and the second matrix elements, and
- an evaluating device (35), which is designed to evaluate the usability of the image matrix automatically by using the distances.

**9.** Apparatus according to the preceding claim, the said apparatus including a processing device (31) for processing cartographic data of a surface of a planet, wherein the processing device (31 is designed to transform and/or to process a map region of the cartographic data, such that cartographic features of the map region can be recorded in the image matrix.

**10.** Apparatus according to the preceding claim, wherein the distance-determining device (37) is designed to determine third distances between the first matrix elements and positions of the cartographic features in the image matrix, and wherein the evaluating device (35) is designed to evaluate the usability of the image matrix automatically by using the third distances.

**11.** Computer program for determining a usability of remote sensing data by using program code means, which are designed to carry out the method according to one of claims 1 to 6.

**12.** Data carrier, on which a data structure is stored, which, after being loaded into a main and/or primary storage means of a computer or computer network, executes the computer program according to claim 11.

**Revendications**

**1.** Procédé de détermination d'une utilisabilité de données de télédétection dans lequel les zones d'image ne sont pas utilisables ou seulement de façon limitée, lorsque dans chaque zone d'image une vue d'un capteur, avec lequel sont obtenues ou ont été obtenues les données de télédétection, est bloquée ou gênée sur un objet de la télédétection, par exemple par des nuages ou des phénomènes près du sol, et sachant que:

- une matrice d'image est formée ou est présentée à partir des données de télédétection,
- des premiers éléments matriciels de la matrice d'image comportent des informations utilisables sur un ou plusieurs objets de la télédétection.
- des seconds éléments matriciels de la matrice d'image ne comportent aucune ou seulement des informations utilisables limitées sur le ou les objets de la télédétection,

- des espacements entre les premiers éléments matriciels et les seconds éléments matriciels sont obtenus (33) et
- l'utilisation des espacements permet d'évaluer automatiquement l'utilisabilité de la matrice d'image (35).

2. Procédé selon la revendication précédente, dans lequel pour au moins une partie des premiers éléments matriciels, on obtient respectivement les premiers espacements par rapport à un bord de la matrice d'image et/ou à un bord d'une zone partielle de la matrice d'image et respectivement les seconds espacements par rapport aux seconds éléments matriciels et dans lequel l'utilisation des premiers et seconds espacements permet d'évaluer l'utilisabilité de la matrice d'image.

3. Procédé selon la revendication précédente, dans lequel lors de l'évaluation de l'utilisabilité de la matrice d'image on prend en compte la proportion des seconds éléments matriciels par rapport aux seconds éléments des éléments matriciels.

4. Procédé selon l'une des revendications précédentes, dans lequel pour au moins une partie des éléments matriciels, pour lesquels les espacements ont été obtenus, chaque fois un minimum des espacements obtenus est déterminé pour l'élément matriciel et dans lequel l'utilisabilité de la matrice d'image est évaluée en utilisant le minimum.

5. Procédé selon l'une des revendications précédentes, dans lequel les seconds éléments matriciels sont formés à partir des valeurs obtenues de rayonnement à partir des nuages.

6. Dispositif selon l'une des revendications précédentes, dans lequel

- la matrice d'image correspond à une image, montrant une surface de planète et prise depuis le dessus de la surface de la planète,
- données cartographiques de la surface de la planète disponibles et
- une gamme de cartes des données cartographiques est transformée et/ou travaillée de sorte que les caractéristiques cartographiques de la gamme de cartes peuvent être insérées dans la matrice d'image.

7. Procédé selon la revendication précédente, dans lequel les positions des caractéristiques cartographiques sont définies dans la matrice d'image, dans lequel les troisièmes espacements des premiers éléments matriciels sont déterminés sur les positions et dans lequel l'utilisation des troisièmes espacements permet d'évaluer automatiquement l'utilisabilité de la matrice d'image.

8. Dispositif de détermination de l'utilisabilité des données de télédétection sachant que les zones d'images ne sont pas utilisables ou seulement de façon limitée, lorsque dans chaque zone d'image une vue d'un capteur, avec lequel sont obtenues ou ont été obtenues les données de télédétection, est bloquée ou gênée sur un objet de la télédétection, par exemple par des nuages ou des phénomènes près du sol, et sachant que le dispositif comporte :

- un dispositif de production de matrice (36) configuré pour produire une matrice d'image à partir des données de télédétection, dans lequel les premiers éléments matriciels comportent des informations utilisables sur un ou plusieurs objets de la télédétection et dans lequel les seconds éléments matriciels de la matrice d'image ne comportent aucune information ou seulement des informations utilisables de manière limitée sur le ou les objets de la télédétection.
- un dispositif de détermination d'espacement (37) configuré pour obtenir des espacements entre les premiers éléments matriciels et les seconds éléments matriciels, et
- un dispositif d'évaluation (35) configuré pour évaluer automatiquement l'utilisabilité de la matrice d'image en utilisant les espacements.

9. Dispositif selon la revendication précédente, avec un dispositif de transformation (31) des données cartographiques provenant de la surface d'une planète, dans lequel le dispositif de transformation (31) est configuré pour transformer et/ou travailler une gamme de cartes des données cartographiques, de telle manière que les caractéristiques cartographiques de la gamme de cartes peuvent être insérées dans la matrice d'image.

10. Dispositif selon la revendication précédente, dans lequel le dispositif de détermination de l'espacement (37) est configuré pour obtenir les troisièmes espacements entre les premiers éléments matriciels et les positions des caractéristiques cartographiques dans la matrice d'image et dans lequel le dispositif d'évaluation (35) est configuré pour évaluer automatiquement l'utilisabilité de la matrice d'image en utilisant les troisièmes espacements.

**11.** Programme informatique pour déterminer l'utilisabilité des données de télédétection avec des codes de programme, configurés pour réaliser le procédé selon l'une des revendications 1 à 6.

**12.** Support de données sur lequel est stockée une structure de données, qui réalise le programme informatique selon la revendication 11 après un chargement dans une mémoire vive et/ou mémoire principale d'un ordinateur ou d'un réseau informatique.

| Satellitendaten |
|---|

| Detektion und Identifikation von Bildfehlern |
|---|

| Datenbank:<br><br>Kalibrationsparameter<br><br>Zusatzdaten (optional)<br><br><br>kartografische Daten |
|---|

| Kalibration |
|---|

| Wolkendetektion und -identifikation |
|---|

| Kartenerstellung | Strukturanalyse |
|---|---|

**33**

| Bewertung der Datennutzbarkeit |
|---|

**31**

**35**

| Datenausgabe |
|---|

# Fig. 1

# Fig. 2

**20a**

**21**

| 1 | 1 | 1 | 1 | 1 | 1 |
|---|---|---|---|---|---|
| 1 | 2 | 2 | 2 | 2 | 1 |
| 1 | 1 | 1 | 2 | 2 | 1 |
| 1 | 1 | 1 | 1 | 2 | 1 |
| 1 | 1 | 1 | 1 | 2 | 1 |
| 1 | 1 | 1 | 1 | 1 | 1 |

**21**

**20b**

# Fig. 3

**21**

| 1 | 1 | 1 |   |   | 1 |
|---|---|---|---|---|---|
| 1 | 2 | 1 |   |   | 1 |
| 1 | 1 | 1 | 1 |   |   |
| 1 | 1 | 1 |   |   | 1 |
| 1 | 1 | 1 | 1 | 1 | 1 |
| 1 | 1 | 1 | 1 | 1 | 1 |

**21**

Fig. 4

Fig. 5

Fig. 6

Fig. 7

25

26

27

28

Fig. 8

Fig. 9

Fig. 10

41

40

Fig. 11

Fig. 12

Fig. 13